# DEMANDE DE BREVET EUROPEEN

(11) **EP 4 202 783 A1**
(43) Date de publication de la demande: **28.06.2023**
(21) Numéro de dépôt: 22215380.1
(22) Date de dépôt: 21.12.2022
(51) Int. Cl.: G06N 3/08, G06N 3/098

(54) **PROCÉDÉ ET SYSTÈME D'APPRENTISSAGE COLLABORATIF AUTOMATIQUE MULTI-PARTICIPANTS D'UN MODÈLE DE CLASSIFICATION DE DONNÉES**

(30) Priorité: 22.12.2021 FR 2114210; 04.07.2022 FR 2206731
(71) Demandeur: THALES, 92400 Courbevoie (FR)
(72) Inventeur: KAPUSTA, Katarzyna, 91767 Palaiseau Cedex (FR); FERRARI, Romain, 91767 Palaiseau Cedex (FR); HELIOU, Alice, 91767 Palaiseau Cedex (FR); THOUVENOT, Vincent, 91767 Palaiseau Cedex (FR); PIATTE, Cyrille, 91767 Palaiseau Cedex (FR); BETTAN, Olivier, 91767 Palaiseau Cedex (FR)
(74) Mandataire: Lavoix

(57) **Abrégé**

L'invention concerne un procédé et un système d'apprentissage collaboratif automatique multi-participants d'un modèle de classification de données d'entrée de type prédéterminé en une pluralité de classes, comportant au moins un système d'agrégation (10) et une pluralité de systèmes de calcul (4₁, 4₂, 4_{P}) participants distincts configurés pour mettre en oeuvre un module de classification (6₁, 6₂, 6_{P}) propre sur des données d'entrée (I₁,I₂,I₃,I₄) pour obtenir des labels de classification associés, et pour transmettre une contribution (C₁₁,..., C₁₄,...,C_{P1},...,C_{P4}) au(x) système(s) d'agrégation. Chaque système d'agrégation met en oeuvre une évaluation (22), pour chaque participant, d'une qualité de la contribution dudit participant en fonction des contributions des autres participants par calcul d'un score de fiabilité attribué audit participant et une vérification (24) de la satisfaction d'un critère de validation par cette qualité de contribution. Si pour un participant donné, le critère de validation n'est pas satisfait, ce participant est éliminé de l'apprentissage collaboratif.

## Description

La présente invention concerne un procédé et un système d'apprentissage collaboratif automatique multi-participants d'un modèle de classification de données.

L'invention se situe dans le domaine de l'apprentissage collaboratif (en anglais « federated learning »), en particulier l'apprentissage collaboratif de modèles de classification de données utilisés en intelligence artificielle.

De nombreux systèmes appliqués, par exemple dans le domaine industriel, médical ou militaire, utilisent des modèles de classification automatique des données, par exemple des modèles basés sur des réseaux de neurones artificiels.

Ce type de modèle de classification comporte un très large nombre de paramètres, dont les valeurs sont calculées et mises à jour de manière dynamique. Il est nécessaire d'apprendre les valeurs des paramètres définissant un modèle de classification, l'apprentissage des paramètres s'effectuant dans une phase d'apprentissage (également appelée entraînement) sur des quantités de données très importantes. De manière classique, des tels modèles de classification prennent en entrée des données d'entrée, par exemple sous forme vectorielle ou matricielle, de type connu, et fournissent en sortie un label de classification (ou étiquette de classification) des données.

L'apprentissage collaboratif a été mis au point pour faciliter les apprentissages des modèles de classification et augmenter leurs performances. Cependant les participants à un apprentissage collaboratif étant des entités distinctes et potentiellement concurrentes, la protection des données partagées est nécessaire.

Des systèmes d'apprentissage collaboratif sans partage effectif de la totalité des données et paramètres ont été mis au point. Dans ce type de systèmes d'apprentissage collaboratif, une première partie des informations (données ou paramètres du modèle de classification) mises en oeuvre pour réaliser la classification est privée à chaque participant, et une deuxième partie des informations (données ou paramètres du modèle de classification) est partagée entre les divers participants.

Chaque participant met en oeuvre un système de calcul pour effectuer une partie de l'apprentissage collaboratif.

Dans un cas de figure, les données d'entrée sur lesquelles s'effectue l'apprentissage collaboratif sont partagées entre les participants, les modules de classification mis en oeuvre par chaque participant sont privés.

Par exemple, le système connu sous le nom de PATE pour « Private Aggregation of Teacher Ensembles » propose un apprentissage collaboratif sur un ensemble de données d'entrée publiques, non labelisées, qui sont fournies à P participants. Chacun des participants met en oeuvre, dans un système de calcul privé, un module de classification privé, et fournit une contribution contenant un label de classification associé à chaque donnée d'entrée, la contribution étant fournie à un ou plusieurs système(s) d'agrégation, qui est un tiers de confiance. Les contributions des participants peuvent être fournies sous forme chiffrée pour augmenter la protection des données. Le système d'agrégation calcule à partir des labels de classification reçus, des labels finaux, chaque entrée ayant un label final associé, et ces labels finaux sont transmis à chaque participant qui peut alors améliorer son modèle de classification privé.

Dans un autre cas de figure, connu sous le nom de « federated learning », le modèle de classification est partagé entre tous les systèmes de calcul participants, chaque participant disposant par ailleurs de données d'entrée, du type prédéterminé, qui sont privées. Chaque participant entraîne le modèle de classification et obtient des valeurs de paramètres. Par exemple, s'agissant d'un réseau de neurones artificiel, les paramètres définissant ce réseau de neurones, i.e. les poids associés à chaque synapse du réseau de neurones artificiel, sont calculés par chaque participant. Ces paramètres forment une contribution de chaque participant, transmise au système d'agrégation, par exemple sous forme d'un vecteur de paramètres.

Le système d'agrégation applique un opérateur mathématique, par exemple une moyenne pondérée, pour obtenir des paramètres finaux qui sont retransmis à chaque participant.

Les travaux de l'état de la technique traitent de la problématique de la sécurité liée à l'agrégateur, par exemple une attaque malveillante d'un système agrégateur.

Une autre problématique à traiter est la problématique d'un participant malveillant ou malhonnête.

En effet, l'agrégation des contributions d'un nombre P de participants, a fortiori lorsque les contributions sont fournies sous forme chiffrée, permet de dissimuler la présence d'un participant malhonnête ou malveillant, qui envoie des contributions erronées, par exemple des résultats aléatoires ou des résultats faussés, mais reçoit néanmoins un modèle de classification résultant de l'apprentissage collaboratif.

Un participant malveillant peut envoyer des contributions faussées avec un objectif de fausser le résultat de l'apprentissage collaboratif.

Un participant malhonnête est un participant qui envoie des données aléatoires ou factices, sans effectivement mettre en oeuvre un entraînement du modèle de classification sur un système de calcul propre, mais récupère néanmoins les résultats des autres participants. Une telle situation n'est pas souhaitable.

Un des objets de l'invention est de remédier à ce problème.

A cet effet, l'invention propose, selon un aspect, un procédé d'apprentissage collaboratif automatique multi-participants d'un modèle de classification de données d'entrée de type prédéterminé en une pluralité de classes désignées par des labels correspondants, la classification permettant d'associer un label à chaque donnée d'entrée par application d'un module de classification, le procédé d'apprentissage collaboratif comportant une participation d'une pluralité de systèmes de calcul distincts, chaque système de calcul étant identifié en tant que participant, chaque système de calcul étant configuré pour mettre en oeuvre un module de classification propre sur des données d'entrée dudit type prédéterminé pour obtenir des labels de classification associés, et pour transmettre une contribution à au moins un système d'agrégation, ladite contribution comportant, selon le cas, soit
a) une association entre données d'entrée et labels correspondants, les mêmes données d'entrée dudit type prédéterminé étant fournies à chacun des P systèmes de calcul, ou
b) des valeurs de paramètres du module de classification propre, chaque module de classification propre ayant une même structure pour chacun des P systèmes de calcul distincts.

Ce procédé comporte des étapes, mises en oeuvre par au moins un processeur dudit au moins un système d'agrégation, de :
- pour chaque participant, évaluation d'une qualité de la contribution dudit participant en fonction des contributions des autres participants par calcul d'un score de fiabilité attribué audit participant,
- vérification de la satisfaction d'un critère de validation de la qualité de contribution de chaque participant, et
- si, pour un participant donné, la qualité de contribution ne satisfait pas le critère de validation, élimination dudit participant de l'apprentissage collaboratif.

Avantageusement, le procédé d'apprentissage collaboratif proposé permet d'évaluer une qualité de contribution de chaque participant et d'éliminer un participant si un critère de validation n'est pas satisfait.

Avantageusement, la performance de l'apprentissage collaboratif est améliorée. L'élimination des contributions des participants malhonnêtes ou malveillants permet d'améliorer la précision du modèle résultant de l'apprentissage collaboratif, et permet aussi de limiter une surcharge en terme de calcul au niveau de l'agrégateur, ce qui peut être surtout un avantage si l'agrégation se fait dans le domaine chiffré.

Le procédé d'apprentissage collaboratif automatique multi-participants selon l'invention peut également présenter une ou plusieurs des caractéristiques ci-dessous, prises indépendamment ou selon toutes les combinaisons techniquement envisageables.

La contribution de chaque participant est chiffrée par un chiffrement homomorphe.

Le procédé comporte, dans le cas a), pour chaque donnée d'entrée, une attribution de label final choisi comme étant le label majoritaire parmi les contributions reçues, l'évaluation de qualité comportant, pour chaque participant, l'augmentation du score de fiabilité associé lorsque la contribution dudit participant comporte l'association entre une entrée et le label final attribué par le système d'agrégation à ladite entrée.

Le procédé comporte, dans le cas a), pour chaque donnée d'entrée, un calcul statistique des labels associés selon les contributions des participants et une fréquence d'attribution correspondante, le procédé comportant en outre, pour chaque participant, pour chaque contribution dudit participant associant une donnée d'entrée et un label, une augmentation du score de fiabilité en fonction de la fréquence d'attribution dudit label, l'augmentation du score de fiabilité étant d'autant plus élevée que la fréquence d'attribution correspondant audit label est élevée.

Le procédé comporte, dans le cas b), un calcul de modèle de classification agrégé défini par des paramètres finaux, les paramètres finaux étant obtenus par application d'un opérateur sur les paramètres reçus dans lesdites contributions, puis, pour chaque participant, un calcul de distance entre les paramètres de la contribution dudit participant et les paramètres finaux, et une mise à jour d'un score de fiabilité en fonction de la distance calculée, l'augmentation du score de fiabilité étant d'autant plus élevée que la distance est faible.

L'opérateur applique une moyenne pondérée.

Suite au calcul du score de fiabilité de chaque participant pour un nombre N donné de contributions, la vérification de la satisfaction d'un critère de validation comporte une comparaison, pour chaque participant, du score de fiabilité attribué audit participant à un seuil de fiabilité, le critère de validation consistant à vérifier si le score de fiabilité est supérieur audit seuil de fiabilité, et si le score de fiabilité est inférieur audit seuil de fiabilité, une élimination dudit participant.

Le procédé est mis en oeuvre par une pluralité de systèmes d'agrégation configurés pour collaborer selon un protocole de calcul collaboratif à partage de secret, et chaque système de calcul participant fournit un fragment de contribution à chaque système d'agrégation, chaque système d'agrégation mettant en oeuvre ladite évaluation d'une qualité du fragment de contribution de chaque participant en fonction des fragments de contributions des autres participants, par calcul d'un fragment de score de fiabilité attribué audit participant.

Selon un autre aspect, l'invention concerne un système d'apprentissage collaboratif automatique multi-participants d'un modèle de classification de données d'entrée de type prédéterminé en une pluralité de classes désignées par des labels correspondants, la classification permettant d'associer un label à chaque donnée d'entrée par application d'un module de classification, le système d'apprentissage collaboratif comportant une pluralité de systèmes de calcul distincts, et au moins un système d'agrégation, chaque système de calcul étant identifié en tant que participant, chaque système de calcul étant configuré pour mettre en oeuvre un module de classification propre sur des données d'entrée dudit type prédéterminé pour obtenir des labels de classification associés, et pour transmettre une contribution audit au moins un système d'agrégation, ladite contribution comportant, selon le cas, soit
a) une association entre données d'entrée et labels correspondants, les mêmes données d'entrée dudit type prédéterminé étant fournies à chacun des P systèmes de calcul, ou
b) des valeurs de paramètres du module de classification propre, chaque module de classification propre ayant une même structure pour chacun des P systèmes de calcul distincts.

Chaque système d'agrégation comporte au moins un processeur configuré pour mettre en oeuvre :
- un module d'évaluation, pour chaque participant, d'une qualité de la contribution dudit participant en fonction des contributions des autres participants par calcul d'un score de fiabilité attribué audit participant,
- un module de vérification de satisfaction de la contribution d'un participant d'un critère de validation,
le système étant en outre configuré pour, si, pour un participant donné, la qualité de contribution ne satisfait pas un critère de validation, éliminer ledit participant de l'apprentissage collaboratif.

Le système d'apprentissage collaboratif automatique multi-participants est configuré pour mettre en oeuvre un procédé d'apprentissage collaboratif automatique multi-participants tel que brièvement décrit ci-dessus, selon toutes ses variantes de mise en oeuvre.

Selon un autre aspect, l'invention concerne un support d'enregistrement d'informations, sur lequel sont mémorisées des instructions logicielles pour l'exécution d'un procédé d'apprentissage collaboratif automatique multi-participants tel que brièvement décrit ci-dessus, lorsque ces instructions sont exécutées par un dispositif électronique programmable.

Selon un autre aspect, l'invention concerne un programme d'ordinateur comportant des instructions logicielles qui, lorsqu'elles sont exécutées par un dispositif électronique programmable, mettent en oeuvre un procédé d'apprentissage collaboratif automatique multi-participants tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 illustre un système d'apprentissage collaboratif multi- participants mettant en oeuvre l'invention selon un premier mode de réalisation ;
[Fig 2] la figure 2 illustre un système d'apprentissage collaboratif multi- participants mettant en oeuvre l'invention selon un deuxième mode de réalisation ;
[Fig 3] la figure 3 est un synoptique des principales étapes d'un procédé de d'apprentissage collaboratif automatique multi- participants d'un modèle de classification de données d'entrée de type prédéterminé selon un mode de réalisation ;
[Fig 4] la figure 4 illustre schématiquement un système d'apprentissage collaboratif selon un troisième mode de réalisation.

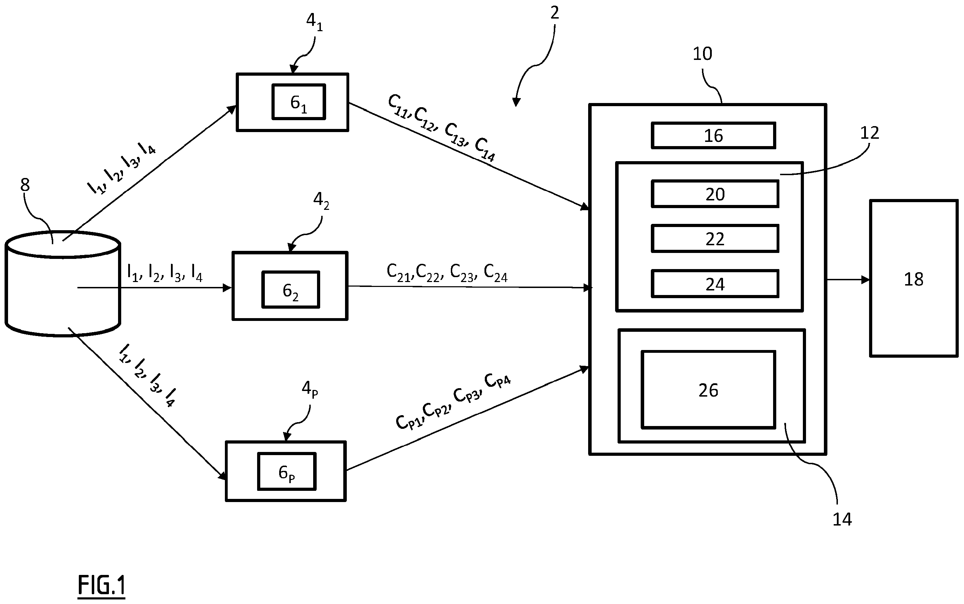

La figure 1 illustre schématiquement un système d'apprentissage collaboratif 2 dans un premier mode de réalisation.

Le système 2 comprend un nombre P de participants. Dans l'exemple de la figure 1, P=3. Bien entendu, il s'agit d'un simple exemple, le nombre P étant un entier positif quelconque.

Chaque participant est dans cet exemple un système de calcul 4₁, 4₂.. 4_{P} , comportant un ou plusieurs dispositifs électroniques de calcul programmables, chaque dispositif électronique de calcul programmable comportant au moins un processeur de calcul (non représenté) configuré pour mettre en oeuvre un module de classification 6₁, 6₂, 6_{P} qui est propre au participant correspondant.

Chaque participant est identifié par exemple par un indice unique de participant (indice p allant de 1 à P).

Chaque module de classification 6ᵢ est appliqué sur des données d'entrée Iₖ d'un type prédéterminé et est configuré pour obtenir des labels de classification Lₖ associés parmi un ensemble de labels de classification prédéterminé.

Dans un mode de réalisation, chaque module de classification 6ᵢ met en oeuvre un réseau de neurones artificiels.

Par exemple, les données d'entrée Iₖ sont des images numériques prises par des caméras de surveillance routière, et les labels de classification sont relatifs à une classification d'éléments de trafic par exemple {voiture, bus, vélo, moto, piéton}.

Dans le mode de réalisation de la figure 1, les données entrée Iₖ sont issues d'une base de données 8 qui est publique, tous les systèmes de calcul participants 4₁ à 4_{P} effectuant des calculs sur cette base de données publique.

Dans ce mode de réalisation, chaque système de calcul 4₁ à 4_{P} est configuré pour envoyer une contribution à un système d'agrégation 10.

La contribution comprend une association entre données d'entrée et labels correspondants.

A titre d'exemple non limitatif, dans la figure 1 on a illustré la transmission de quatre données d'entrée I₁, I₂, I₃, I₄ à chaque système de calcul participant.

Bien entendu, le nombre N de données d'entrée fournies à chaque participant est un nombre quelconque.

Par exemple, chaque donnée d'entrée est une image numérique de taille normalisée.

La contribution d'un participant p pour une donnée d'entrée Iₖ est notée Cₚₖ. Cette contribution comprend le label de classification attribué par le système de calcul 4ₚ à l'entrée Iₖ.

Le système d'agrégation 10 est un système centralisé qui reçoit les contributions des divers systèmes de calcul participants.

Dans un mode de réalisation, les contributions des participants sont chiffrées, par chacun des systèmes de calcul participants, par un chiffrement homomorphe Le chiffrement homomorphe est bien connu dans le domaine de la cryptographie. Le chiffrement homomorphe est un système de chiffrement dans lequel certaines opérations mathématiques permettent d'effectuer des calculs sur les données chiffrées sans les déchiffrer.

Le système d'agrégation 10 est un système de calcul électronique comportant un ou plusieurs dispositifs électroniques programmables (e.g. ordinateurs).

Le système d'agrégation 10 comporte au moins un processeur de calcul 12, une unité de mémoire électronique 14, une interface 16 de communication avec des dispositifs distants, par un protocole de communication choisi, par exemple un protocole filaire et/ou un protocole de communication radio. Les éléments du système 10 sont adaptés à communiquer via un bus de communication.

Le système d'agrégation 10 est également adapté à transmettre des données, par exemple sous forme chiffrée, à un système utilisateur 18, qui possède une clé de déchiffrement des données chiffrées. Par exemple, les données chiffrées transmises au système utilisateur 18 sont les labels finaux associés au données d'entrée.

Le processeur de calcul 12 est configuré pour mettre en oeuvre un module 20 de réception des contributions des systèmes de calcul participants et de calculs de labels de classification finaux associés aux données d'entrée en fonction de ces contributions, un module 22 d'évaluation d'une qualité de la contribution dudit participant en fonction des contributions des autres participants, et un module 24 de vérification d'un critère de validation pour chaque participant, et si l'un des participants ne satisfait pas le critère de validation, d'élimination dudit participant de l'apprentissage collaboratif.

L'unité de mémoire électronique 14 est configurée pour mémoriser une structure de données, par exemple une table 26, comportant des scores représentatifs de la qualité de la participation de chaque participant.

Dans un mode de réalisation, les modules 20, 22, 24 sont réalisés sous forme d'instructions logicielles formant un programme d'ordinateur, qui, lorsqu'il est exécuté par un dispositif électronique programmable, met en oeuvre un procédé d'apprentissage collaboratif automatique à multi-participants selon l'invention.

En variante non représentée, les modules 20, 22, 24 sont réalisés chacun sous forme de composants logiques programmables, tels que des FPGA (de l'anglais *Field Programmable Gate Array),* des microprocesseurs, des composants GPGPU (de l'anglais *General-purposeprocessing on graphies processing),* ou encore de circuits intégrés dédiés, tels que des ASIC (de l'anglais *Application Spécifie Integrated Circuit).*

Le programme d'ordinateur comportant des instructions logicielles est en outre apte à être enregistré sur un support d'enregistrement d'informations, non-transitoire et lisible par ordinateur. Ce support lisible par ordinateur est par exemple, un médium apte à mémoriser les instructions électroniques et à être couplé à un bus d'un système informatique. A titre d'exemple, ce support est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

Des modes de réalisation plus détaillés des modules 20, 22, 24 seront décrits ci-après.

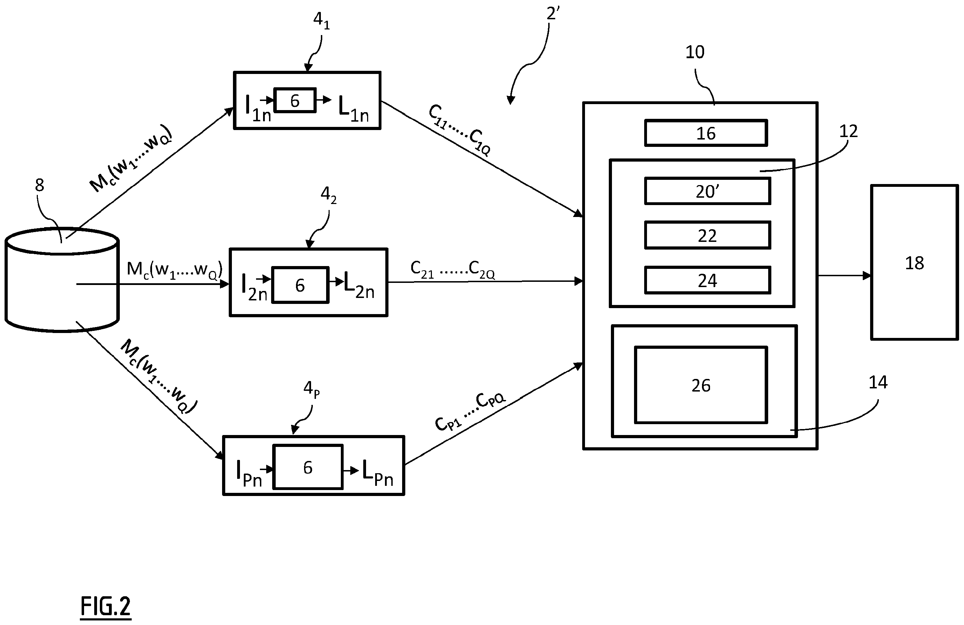

La figure 2 illustre schématiquement un système d'apprentissage collaboratif 2' dans un deuxième mode de réalisation, qui est une variante du mode de réalisation décrit en référence à la figure 1.

Dans ce deuxième mode de réalisation, la donnée commune partagée entre les systèmes de calcul 4₁ à 4_{P} est le modèle de classification implémenté par le module de classification 6.

Ce modèle est référencé M_{c} et est défini par un ensemble de paramètres w₁ à w_{Q}, qui sont par exemple des pondérations internes d'un réseau de neurones artificiels d'architecture donnée, i.e. ayant un nombre de couches et un nombre de neurones par couche prédéterminé.

Chaque système de calcul 4₁ à 4_{P} effectue un apprentissage des valeurs des paramètres w₁ à w_{Q} sur des données internes I₁ₙ à I_{Pn}, et fournit en sortie une contribution fournissant les valeurs des paramètres calculées.

Chaque participant p utilise un nombre effectif Np de données internes, les valeurs de Np étant spécifiques à chaque participant.

Le système d'agrégation 10 met en oeuvre, dans ce mode de réalisation, un module 20' de réception des contributions des systèmes de calcul participants et de calcul des paramètres finaux du modèle de classification à appliquer, ainsi qu'un module 22 d'évaluation d'une qualité de la contribution dudit participant en fonction des contributions des autres participants, et un module 24 de vérification d'un critère de validation pour chaque participant, et si l'un des participants ne satisfait pas le critère de validation, d'élimination dudit participant de l'apprentissage collaboratif.

De manière analogue à ce qui a été décrit en référence à la figure 1, les modules 20', 22, 24 sont, dans un mode de réalisation, réalisés sous forme d'instructions logicielles formant un programme d'ordinateur, qui, lorsqu'il est exécuté par un dispositif électronique programmable, met en oeuvre un procédé d'apprentissage collaboratif automatique à multi-participants selon l'invention.

En variante non représentée ces modules sont réalisés sous forme de composants logiques programmables, tels que des FPGA, des microprocesseurs, des composants GPGPU, ou encore de circuits intégrés dédiés, tels que des ASIC.

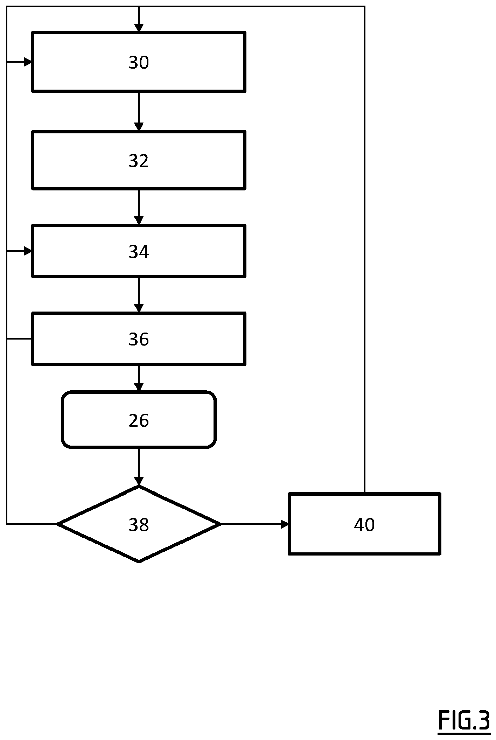

La figure 3 est un synoptique des principales étapes d'un procédé de d'apprentissage collaboratif automatique multi- participants d'un modèle de classification de données d'entrée de type prédéterminé selon un mode de réalisation.

Le procédé comporte une étape 30 de réception des contributions des P systèmes de calcul participants, pour un tour d'exécution.

Le procédé sera décrit ci-dessous pour le cas le cas a), correspondant au système 2 de la figure 1, où la contribution est une association entre données d'entrée et labels correspondants, les mêmes données d'entrée de type prédéterminé étant fournies à chacun des P systèmes de calcul. Dans ce cas, un tour d'exécution correspond à la réception de la contribution pour une donnée d'entrée ou pour un sous-ensemble prédéterminé des données d'entrée, par exemple I₁ à Iₙ.

Par exemple, la contribution de chaque participant est reçue sous forme d'un vecteur de labels, la position d'un label dans le vecteur indiquant l'indice de donnée d'entrée associé.

Les labels sont par exemple des valeurs numériques, chaque valeur numérique indiquant une classe prédéterminée de la classification.

Le procédé comporte également 32 de calcul d'un modèle de classification agrégé.

Dans le cas a) mentionné ci-dessus, à partir des contributions des P participants distincts, chaque contribution d'un participant d'indice p comportant, pour au moins une donnée d'entrée Iₖ, un label de classification Lₚₖ associé, le label final LFₖ associé à la donnée d'entrée Iₖ est calculé à partir des labels L₁ₖ à L_{Pk} reçus.

Par exemple, un algorithme de vote majoritaire est appliqué, le label final LFₖ étant choisi égal au label majoritaire parmi les labels L₁ₖ à L_{Pk} reçus.

Cette attribution de valeur de label est efficace lorsque le nombre de participants est suffisant, en particulier au moins égal à 3, et que, par hypothèse, la majorité des participants comporte des participants « honnêtes », qui fournissent des contributions obtenues suite à des calculs effectifs.

Le procédé comporte en outre une étape 34, appliquée pour chaque participant d'indice k, de comparaison de la contribution de ce participant et de la valeur finale du modèle de classification.

Dans le cas a), pour un participant d'indice k donné, on examine le label de classification Lₖⱼ associée à la ou à chaque donnée d'entrée Iⱼ en comparaison avec le label final attribué LFⱼ.

En cas d'égalité, un score de fiabilité du participant d'indice k, noté Score_k, est augmenté à l'étape 36 de mise à jour du score de fiabilité.

Par exemple, dans un mode de réalisation, tous les scores de fiabilité associés aux participants sont initialisés à zéro, puis augmentés d'une valeur constante donnée, par exemple de 1, à chaque fois que le label de classification proposé par le participant pour une entrée est égal au label final attribué à cette entrée.

Par exemple, les divers scores de fiabilité sont mémorisés dans un tableau, ou dans toute structure de données adéquate.

Les étapes 34, 36 contribuent à effectuer une évaluation de la qualité de contribution de chaque participant.

Pour donner un exemple numérique concret, en lien avec la figure 1, considérant que :
- la contribution du système de calcul 4, pour les entrées I₁ à I₄ est :
   C₁₁=0, C₁₂=2, C₁₃=0, C₁₄=2 ;
- la contribution du système de calcul 4₂ pour les entrées I₁ à I₄ est :
   C₂₁=1 , C₂₂=0, C₂₃=3, C₂₄=0 ;
- la contribution du système de calcul 4_{P} pour les entrées I₁ à I₄ est :
   C_{P1}=0, C_{P2}=0, C_{P3}=0, C_{P4}=2;

Le vote majoritaire attribue les labels finaux suivants :
LF₁=0 , LF₂=0 , LF₃=0, LF₄=2 ;

Les scores associés aux participants sont alors :
Score_1 =3
Score_2=1
Score_P=4

Bien entendu il s'agit d'un exemple numérique simplifié, le procédé étant en pratique appliqué à des grands volumes des données d'entrée, le nombre effectif de données dépendant du cas d'usage, et étant typiquement au moins égal à 50.

Selon une variante, le procédé calcule des statistiques sur les contributions des participants, par exemple la fréquence d'attribution, pour chaque donnée d'entrée, des divers labels de classification.

Selon cette variante, une augmentation du score de fiabilité (étape 36) est effectuée en fonction de la fréquence d'attribution du label proposé par un participant pour une donnée d'entrée, l'augmentation du score de fiabilité étant d'autant plus élevée que la fréquence d'attribution est élevée. Par exemple, le score de fiabilité est un nombre réel, et l'augmentation du score est égale à la fréquence d'attribution sur une échelle de 0 à 1.

Les étapes 30 à 36 sont répétées pour un nombre prédéterminé de tours d'exécution.

En sortie, une structure de données 26, e.g. une table contenant les scores de fiabilité calculés pour chaque participant est obtenue.

Avantageusement, la mise en oeuvre de plusieurs tours d'exécution permet d'augmenter la sécurité en rendant toute attaque malveillante ayant pour objectif de récupérer les données privées de chaque participant plus difficile.

La structure 26 est fournie en entrée à une étape 38 de vérification de la satisfaction d'un critère de validation de la qualité de contribution de chaque participant.

Selon un mode de réalisation, l'étape 38 met en oeuvre, pour chaque participant, la comparaison du score de fiabilité calculé à un seuil de fiabilité prédéterminé.

Si le score de fiabilité est inférieur au seuil de fiabilité, le participant est éliminé (étape 40), les contributions du système de calcul de ce participant ne sont plus prises en considération dans l'apprentissage collaboratif.

De plus, il est prévu de ne pas fournir les résultats de l'apprentissage collaboratif à un participant éliminé.

Si le score de fiabilité est supérieur au seuil de fiabilité, la contribution de ce participant est validée.

Selon un mode de réalisation alternatif, les contributions sont obtenues sous forme chiffrée par un chiffrement homomorphe.

Dans ce cas, les contributions sont protégées, ainsi que l'identité des participants. Les calculs de score de fiabilité peuvent être effectué sur les contributions chiffrées grâce aux propriétés du chiffrement homomorphe. Ainsi, les étapes 30 à 38 sont réalisées par le système d'agrégation 10.

Cependant, l'étape 40 d'élimination d'un participant dont la qualité de contribution ne satisfait pas le critère de validation (e.g. score de fiabilité inférieur au seuil de fiabilité) est effectuée par un système possédant la clé de déchiffrement. Dans un mode de réalisation, l'élimination 40 est mise en oeuvre par un système utilisateur 18, suite à un échange entre le système utilisateur 18 et le système d'agrégation 10.

Le procédé s'applique également dans le cas b), correspondant au système 2' de la figure 2, où la contribution comporte des valeurs de paramètres du module de classification, ce module de classification ayant les mêmes paramètres et la même architecture pour chaque système de calcul, avec quelques différences de mise en oeuvre de certaines étapes. Par exemple, le module de classification met en oeuvre un réseau de neurones artificiels.

Dans ce cas, un tour d'exécution correspond à la réception de la contribution fournissant un sous-ensemble des valeurs des paramètres par chaque système de calcul participant.

L'étape 32 de calcul d'un modèle de classification agrégé effectue, à partir des contributions des P participants distincts, un calcul des valeurs finales des paramètres du modèle de classification agrégé.

La valeur finale est obtenue pour chaque paramètre wⱼ à partir des contributions des P participants. Par exemple, un opérateur mathématique de type moyenne ou moyenne pondérée est appliqué sur l'ensemble des contributions w₁ⱼ à w_{Pj} reçues.

A l'étape 34 de comparaison, pour chaque participant d'indice k, de la contribution de ce participant et de la valeur finale du modèle de classification agrégé, est calculée une distance entre chaque paramètre proposé dans la contribution du participant d'indice k considéré et le paramètre final.

Par exemple, la distance est une différence en valeur absolue.

Si les paramètres sont présentés sous forme d'un vecteur, une distance vectorielle entre le vecteur de paramètres fourni par le participant d'indice k et le vecteur de paramètre final est calculée, par exemple une distance selon la norme L1 ou selon la norme L2 (distance euclidienne).

La mise à jour 36 du score de fiabilité est alors effectuée en fonction de la distance calculée, plus la distance étant grande, moins le score de fiabilité étant augmenté.

En d'autres termes, l'augmentation du score de fiabilité est d'autant plus élevée que la distance est faible.

Les autres étapes du procédé sont inchangées dans le cas b).

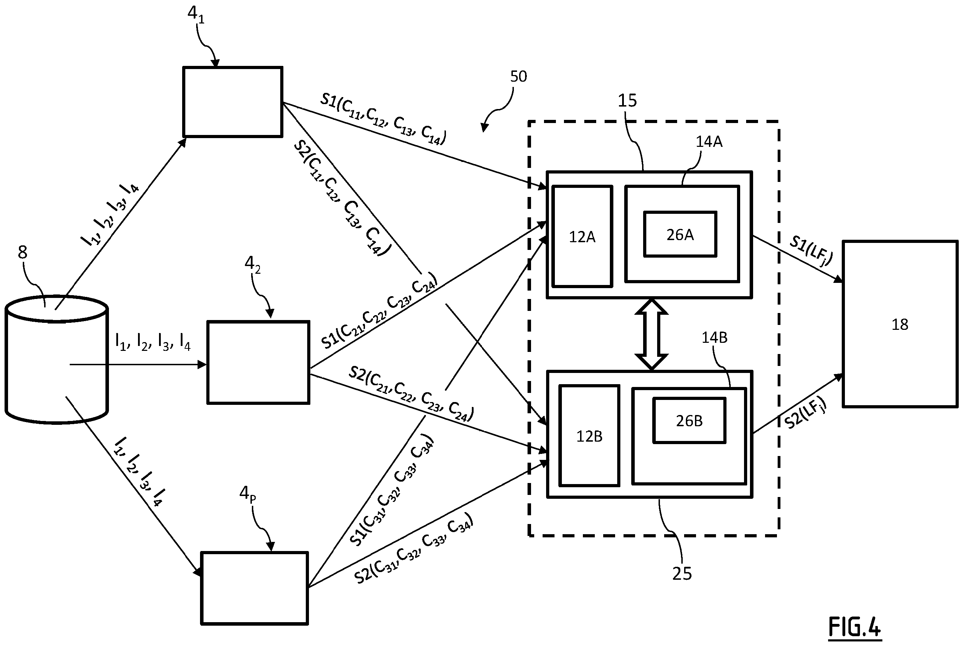

La figure 4 illustre schématiquement un système d'apprentissage collaboratif 50 dans un troisième mode de réalisation, dans le cas où un calcul multipartite sécurisé est mis en oeuvre.

Le calcul multipartite sécurisé (en anglais, *secure multi-party computation*) , abrégé en MPC, est une branche de la cryptographie dont l'objectif est de permettre aux agents d'un système, adaptés à communiquer entre eux, de calculer conjointement une fonction sur leurs entrées, afin que les entrées restent privées et que le résultat soit exact.

Le système 50 illustré à la figure 4 est une variante du système 2 de la figure 1, comportant dans cet exemple deux systèmes d'agrégation, référencés respectivement 15 et 25.

Bien entendu il s'agit d'un exemple, le nombre de systèmes d'agrégation n'étant pas limité à deux.

Les systèmes d'agrégation peuvent éventuellement être certains des participants 4ₖ ou des serveurs de calcul indépendants.

Le système d'apprentissage collaboratif 50 met en oeuvre un protocole MPC de type à partage de secret (ou « secret sharing » en anglais), dans lequel les données à partager, qui sont les contributions des systèmes de calcul 4₁ à 4_{P} participants sont partagées par des fonctions cryptographiques en deux fragments (en anglais « shares ») notés respectivement S1 et S2 pour chaque contribution.

Les fragments respectifs sont envoyés par chacun des systèmes de calcul participants à chaque système d'agrégation.

Plus précisément, un premier fragment d'une contribution (Cₖ₁,Cₖ₂,...,C_{kN}) d'un système de calcul 4ₖ, noté S₁(Cₖ₁,Cₖ₂,...,C_{kN}) est envoyé au premier système d'agrégation 15, et un deuxième fragment de la contribution (Cₖ₁,Cₖ₂,...,C_{kN}) du système de calcul 4ₖ, noté S₂(Cₖ₁,Cₖ₂,...,C_{kN}) est envoyé au deuxième système d'agrégation 25.

Il n'est pas possible de reconstruire la contribution (Cₖ₁,Cₖ₂,...,C_{kN}) sans avoir le premier et deuxième fragments.

Chaque système d'agrégation 15, 25 comporte respectivement un processeur de calcul 12A, 12B, une unité de mémoire électronique 14A, 14B configurée pour stocker une structure de données 26A, 26B, et met en oeuvre des modules analogues à ceux du système d'agrégation 10 décrit en référence à la figure 1.

Chaque système d'agrégation fournit un fragment du label final pour chaque donnée d'entrée : le premier système d'agrégation 15 fournit un premier fragment S₁(LFⱼ) du label final de la donnée d'entrée Iⱼ, et le deuxième système d'agrégation 25 fournit un deuxième fragment S₂(LFⱼ) du label final de la donnée d'entrée Iⱼ, et ce pour chaque donnée d'entrée traitée.

Selon un principe analogue à celui décrit ci-dessus en référence à la figure 3, les systèmes d'agrégation mettent en oeuvre, pour chaque participant, une évaluation de la qualité de la contribution du participant considéré en fonction des contributions des autres participants par calcul d'un score de fiabilité attribué audit participant.

Les étapes 30-40 de la figure 3 sont réalisées d'une façon distribuée entre les système d'agrégation 15 et 20, grâce à l'utilisation du protocole MPC.

Chaque opération réalisée sur les données dans le domaine « en clair » (non chiffré) est transformée en une opération (protocole) sur les fragments de données comprenant un ou plusieurs échanges d'information entre les systèmes d'agrégation 15 et 25 qui vont réaliser les calculs sur les fragments.

Les résultats de chaque opération sont eux-mêmes des fragments distribués entre les systèmes 15 et 25 ; ainsi, le résultat en clair peut être déchiffré si les fragments correspondant sont tous assemblés au sein d'au moins un système.

Chaque opération du protocole MPC peut être aussi accompagnée des opérations supplémentaires ayant pour but la vérification du bon déroulement du protocole.

Contrairement à la réalisation utilisant le chiffrement homomorphe, le déchiffrement d'une valeur ne nécessite pas d'intervention de l'utilisateur 18. Les systèmes d'agrégation 15, 25 peuvent déchiffrer ensemble une valeur en rassemblant ses fragments.

La logique derrière les étapes 30 à 38 reste la même mais réalisée par les deux systèmes.

La structure de données 26 est implémentée sous-forme distribuée : chaque système d'agrégation 15, 25 possède sa structure 26A, 26B contenant les fragments des valeurs stockées dans la table (ex. système 15 possède la structure 26A et le système 25 possède la structure 26B), chaque structure 26A, 26B contenant des fragments scores de fiabilité calculés pour chaque participant.

L'étape 38 est dans ce cas réalisée de façon distribuée sur les fragments de chaque structure (e.g. table) 26A, 26B, et le résultat obtenu (par exemple la liste des participants ayant un score de fiabilité qui a atteint ou dépassé le seuil de fiabilité exigé pour continuer l'apprentissage) est lui aussi distribué.

Dans l'étape 40, les systèmes échangent leurs résultats partiels et arrivent ainsi à reconstruire ce résultat. Ils peuvent ensemble prendre une décision concernant l'élimination d'un participant.

Une variante consisterait dans l'envoi des structures 26A, 26B à un système utilisateur qui prendrait la décision d'élimination (cas similaire à l'implémentation à l'aide du chiffrement homomorphe).

D'autres types de protocole MPC que ceux reposant sur le partage du secret pourraient être utilisés, comme ceux reposant sur les circuit brouillés (« garbled circuits » en anglais). Le chiffrement des données et les opérations sur les données seraient différents, mais le principe du calcul resterait le même : les opérations dans le domaine clair seraient remplacées par un protocole se déroulant dans le domaine chiffré et sécurisé.

## Revendications

1. Procédé d'apprentissage collaboratif automatique multi-participants d'un modèle de classification de données d'entrée de type prédéterminé en une pluralité de classes désignées par des labels correspondants, la classification permettant d'associer un label à chaque donnée d'entrée par application d'un module de classification (6₁, 6₂, 6_{P}), le procédé d'apprentissage collaboratif comportant une participation d'une pluralité de systèmes de calcul (4₁, 4₂, 4_{P}) distincts, chaque système de calcul étant identifié en tant que participant, chaque système de calcul (4₁, 4₂, 4_{P}) étant configuré pour mettre en oeuvre un module de classification (6₁, 6₂, 6_{P}) propre sur des données d'entrée (I₁,I₂,I₃,I₄) dudit type prédéterminé pour obtenir des labels de classification associés, et pour transmettre une contribution (C₁₁,..., C₁₄,...,C_{P1},...,C_{P4}) à au moins un système d'agrégation, ladite contribution comportant, selon le cas, soit
a) une association entre données d'entrée et labels correspondants, les mêmes données d'entrée dudit type prédéterminé étant fournies à chacun des P systèmes de calcul, ou
b) des valeurs de paramètres du module de classification propre, chaque module de classification propre ayant une même structure pour chacun des P systèmes de calcul distincts,
**caractérisé en ce qu'**il comporte des étapes, mises en oeuvre par au moins un processeur dudit au moins un système d'agrégation, de :
- pour chaque participant, évaluation (34, 36, 38) d'une qualité de la contribution dudit participant en fonction des contributions des autres participants par calcul (36) d'un score de fiabilité attribué audit participant,
- vérification (38) de la satisfaction d'un critère de validation de la qualité de contribution de chaque participant, et
- si, pour un participant donné, la qualité de contribution ne satisfait pas le critère de validation, élimination (40) dudit participant de l'apprentissage collaboratif.

2. Procédé selon la revendication 1, dans lequel la contribution de chaque participant est chiffrée par un chiffrement homomorphe.

3. Procédé selon la revendication 1 ou 2, comportant, dans le cas a) où ladite contribution comporte une association entre données d'entrée et labels correspondants, les mêmes données d'entrée dudit type prédéterminé étant fournies à chacun des P systèmes de calcul, pour chaque donnée d'entrée, une attribution de label final choisi comme étant le label majoritaire parmi les contributions reçues, l'évaluation de qualité comportant, pour chaque participant, l'augmentation (36) du score de fiabilité associé lorsque la contribution dudit participant comporte l'association entre une entrée et le label final attribué par le système d'agrégation à ladite entrée.

4. Procédé selon la revendication 1 ou 2, comportant, dans le cas a) où ladite contribution comporte une association entre données d'entrée et labels correspondants, les mêmes données d'entrée dudit type prédéterminé étant fournies à chacun des P systèmes de calcul, pour chaque donnée d'entrée, un calcul statistique des labels associés selon les contributions des participants et une fréquence d'attribution correspondante, le procédé comportant en outre,
pour chaque participant, pour chaque contribution dudit participant associant une donnée d'entrée et un label, une augmentation (36) du score de fiabilité en fonction de la fréquence d'attribution dudit label, l'augmentation du score de fiabilité étant d'autant plus élevée que la fréquence d'attribution correspondant audit label est élevée.

5. Procédé selon la revendication 1 ou 2, comportant, dans le cas b), où ladite contribution comporte des valeurs de paramètres du module de classification propre, chaque module de classification propre ayant une même structure pour chacun des P systèmes de calcul distincts, un calcul (32) de modèle de classification agrégé défini par des paramètres finaux, les paramètres finaux étant obtenus par application d'un opérateur sur les paramètres reçus dans lesdites contributions, puis, pour chaque participant, un calcul (34) de distance entre les paramètres de la contribution dudit participant et les paramètres finaux, et une mise à jour d'un score de fiabilité en fonction de la distance calculée, l'augmentation du score de fiabilité étant d'autant plus élevée que la distance est faible.

6. Procédé selon la revendication 5 dans lequel ledit opérateur applique une moyenne pondérée.

7. Procédé selon l'une des revendications 3 à 6, dans lequel, suite au calcul du score de fiabilité de chaque participant pour un nombre N donné de contributions, la vérification (38) de la satisfaction d'un critère de validation comporte une comparaison (38), pour chaque participant, du score de fiabilité attribué audit participant à un seuil de fiabilité, le critère de validation consistant à vérifier si le score de fiabilité est supérieur audit seuil de fiabilité, et si le score de fiabilité est inférieur audit seuil de fiabilité, une élimination dudit participant.

8. Procédé selon l'une quelconque des revendications 1 à 7, mis en oeuvre par une pluralité de systèmes d'agrégation configurés pour collaborer selon un protocole de calcul collaboratif à partage de secret, dans lequel chaque système de calcul (4₁, 4₂, 4_{P}) participant fournit un fragment de contribution à chaque système d'agrégation (15, 25), chaque système d'agrégation mettant en oeuvre ladite évaluation (34, 36, 38) d'une qualité du fragment de contribution de chaque participant en fonction des fragments de contributions des autres participants, par calcul d'un fragment de score de fiabilité attribué audit participant.

9. Programme d'ordinateur comportant des instructions logicielles qui, lorsqu'elles sont exécutées par un dispositif électronique programmable, mettent en oeuvre un procédé d'apprentissage collaboratif automatique multi-participants conforme aux revendications 1 à 8.

10. Système d'apprentissage collaboratif automatique multi-participants d'un modèle de classification de données d'entrée de type prédéterminé en une pluralité de classes désignées par des labels correspondants, la classification permettant d'associer un label à chaque donnée d'entrée par application d'un module de classification (6₁, 6₂, 6_{P}), le système d'apprentissage collaboratif comportant une pluralité de systèmes de calcul (4₁, 4₂, 4_{P}) distincts, et au moins un système d'agrégation (10, 15, 25), chaque système de calcul étant identifié en tant que participant, chaque système de calcul (4₁, 4₂, 4_{P}) étant configuré pour mettre en oeuvre un module de classification (6₁, 6₂, 6_{P}) propre sur des données d'entrée (I₁,I₂,I₃,I₄) dudit type prédéterminé pour obtenir des labels de classification associés, et pour transmettre une contribution (C₁₁,..., C₁₄,...,C_{P1},...,C_{P4}) audit au moins un système d'agrégation, ladite contribution comportant, selon le cas, soit
a) une association entre données d'entrée et labels correspondants, les mêmes données d'entrée dudit type prédéterminé étant fournies à chacun des P systèmes de calcul, ou
b) des valeurs de paramètres du module de classification propre, chaque module de classification propre ayant une même structure pour chacun des P systèmes de calcul distincts,
**caractérisé en ce que** chaque système d'agrégation comporte au moins un processeur configuré pour mettre en oeuvre :
- un module d'évaluation (22), pour chaque participant, d'une qualité de la contribution dudit participant en fonction des contributions des autres participants par calcul d'un score de fiabilité attribué audit participant,
- un module (24) de vérification de satisfaction de la contribution d'un participant d'un critère de validation,
le système étant en outre configuré pour, si, pour un participant donné, la qualité de contribution ne satisfait pas un critère de validation, éliminer ledit participant de l'apprentissage collaboratif.
